# EUROPÄISCHE PATENTSCHRIFT

(11) **EP 2 396 971 B1**
(45) Veröffentlichungstag und Bekanntmachung des Hinweises auf die Patenterteilung: **25.07.2018**
(21) Anmeldenummer: 10704138.6
(22) Anmeldetag: 12.02.2010
(51) Int. Cl.: H04Q 9/00

(54) **SENSOR UND SENSORNETZWERK FÜR EIN LUFTFAHRZEUG**
SENSOR AND SENSOR NETWORK FOR AN AIRCRAFT
CAPTEUR ET RÉSEAU DE CAPTEURS POUR UN AÉRONEF

(30) Priorität: 16.02.2009 DE 102009009189; 17.02.2009 US 153047 P
(43) Veröffentlichungstag der Anmeldung: 21.12.2011
(73) Patentinhaber: Airbus Operations GmbH, 21129 Hamburg (DE)
(72) Erfinder: MÜLLER, Jan, 21077 Hamburg (DE); GLASER, Daniel, 22761 Hamburg (DE); SCHWARK, Uwe, 28870 Ottersberg (DE)
(74) Vertreter: LKGLOBAL Lorenz & Kopf PartG mbB Patentanwälte
(86) Internationale Anmeldenummer: PCT/EP2010/051793
(87) Internationale Veröffentlichungsnummer: WO 2010/092152

(56) Entgegenhaltungen:
- US-A1- 2008 036 617
- US-A1- 2008 228 331
- US-B1- 6 617 963

## Beschreibung

### Verwandte Anmeldungen

Die vorliegende Anmeldung beansprucht die Priorität der deutschen Patentanmeldung 10 2009 009 189.0, eingereicht am 16. Februar 2009 und der US-Provisional Application 61/153,047, eingereicht am 17. Februar 2009.

### Gebiet der Erfindung

Die Erfindung betrifft die drahtlose Übermittlung von Sensormesswerten innerhalb von Luftfahrzeugen. Insbesondere betrifft die Erfindung einen Sensorknoten zur Erfassung und Vorverarbeitung von Messwerten in einem Luftfahrzeug, ein Sensornetzwerk für ein Luftfahrzeug, ein Luftfahrzeug sowie ein Verfahren zum Ermitteln eines Zustands einer Systemkomponente in einem Luftfahrzeug.

### Technologischer Hintergrund

Sensoren in Flugzeugen werden dazu verwendet, physikalische Messgrößen zu detektieren, mit deren Hilfe Aussagen über den Zustand einer Flugzeugsystemkomponente, etc. getroffen werden können. Diese Sensoren sind über entsprechende elektrische Leitungen an eine Stromversorgung sowie an eine Auswerteeinheit angeschlossen. Aufgrund von Gewichtseinschränkungen im Flugzeugbau, sowie der Komplexität der notwendigen elektrischen Leitungsführung für ein Sensornetzwerk werden Sensoren derzeit nur sehr eingeschränkt und nur dort, wo sie unentbehrlich sind, verwendet.

Zur Verbesserung und Beschleunigung des Wartungsablaufs von Luftfahrzeugen ist es wünschenswert, den Zustand aller relevanter Systemkomponenten und Einbauten zeitnah ermitteln zu können und einer zentralen Einheit zur Erfassung und Auswertung zur Verfügung zu stellen.

DE 100 04 384 A1 und US 6,587,188 B2 beschreiben eine Sensoranordnung zur Erfassung von Temperaturen. Der Sensor weist eine optische Faser auf, mit deren Hilfe Spannungen im Material detektiert werden können. Der Einbau solcher Sensoren ist nicht an allen Orten in einem Flugzeug möglich.

US 2008/036617 A1 betrifft ein System mit einem Sensor, einem Speicher und einer Energiegewinnungseinrichtung, das auf einer Struktur befestigt ist.

US 6 617 963 B1 betrifft Aufzeichnungseinrichtungen für Ereignisse mit Identifizierungscodes.

US 2008/228331 A1 betrifft ein System und ein Verfahren zum Messen von Parametern von Flugzeug Loci.

### Zusammenfassung der Erfindung

Es ist eine Aufgabe der Erfindung, eine verbesserte Überwachung von Systemkomponenten und Einbauten in einem Flugzeug bereitzustellen.

Die Aufgabe wird gelöst durch die Merkmale der unabhängigen Ansprüche. Weiterbildungen der Erfindung ergeben sich aus den Unteransprüchen.

Die beschriebenen Ausführungsbeispiele betreffen gleichermaßen den Sensorknoten, das Sensornetzwerk, das Luftfahrzeug und das Verfahren. In anderen Worten lassen sich im Folgenden beispielsweise unter Bezugnahme auf den Sensorknoten genannte Merkmale auch als Verfahrensschritte implementieren, und umgekehrt.

Gemäß einem Beispiel ist ein Sensorknoten zur Erfassung von Messwerten in einem Luftfahrzeug angegeben, der eine Sensoreinheit, eine Energieversorgungseinheit, eine Prozessoreinheit und eine Sende-Empfangseinheit aufweist. Die Sensoreinheit dient der Erfassung der Messwerte. Die Messwerte ermöglichen Aussagen über den Zustand einer entsprechenden Systemkomponente des Luftfahrzeugs oder entsprechender Einbauten. Dies wird dadurch ermöglicht, dass die Sensoreinheit (und damit der gesamte Sensorknoten) in der Nähe der Systemkomponente untergebracht ist oder darin integriert ist.

Die Energieversorgungseinheit ist zur Versorgung des Sensorknotens mit elektrischer Energie ausgeführt und die Prozessoreinheit dient der Vorverarbeitung der erfassten Messwerte. Die Sende-/Empfangseinheit ist zur drahtlosen Übertragung der erfassten vorverarbeiteten Messwerte an eine zentrale Datensammel- und Auswerteeinheit ausgeführt.

Weiter ist der Sensorknoten zur Durchführung eines Wechsels des Frequenzbereichs zur Übertragung der erfassten vorverarbeiteten Messwerte in Abhängigkeit von einem Wechsel des Flugzustands des Luftfahrzeugs ausgeführt.

An dieser Stelle ist zu beachten, dass eine Vorverarbeitung der erfassten Messwerte im Sensorknoten erfolgen kann, diese aber nicht unbedingt erforderlich ist. In der Regel wird die in einem Sensorknoten anfallende Messdatenmenge und physikalische Messtype darüber entscheiden, ob eine Vorverarbeitung innerhalb des Sensorknotens erforderlich ist. Alternativ kann diese Verarbeitung auch in der zentralen Datensammel- und Auswerteeinheit erfolgen.

In einer einfachen Ausführungsform weist der Sensorknoten lediglich die Sensoreinheit, die Energieversorgungseinheit und die Sende-/Empfangseinheit auf. Eine Prozessoreinheit ist nicht notwendig. Vielmehr werden die erfassten Messwerte direkt von der Sensoreinheit an die Sende-/Empfangseinheit übergeben und dann drahtlos übertragen.

Der Sensorknoten dient beispielsweise der Überwachung stark strapazierter Strukturbauteile im Flugzeug (Strukturmonitoring).

Gemäß einem Beispiel ist ein Sensornetzwerk für ein Luftfahrzeug angegeben, welches mehrere oben und im Folgenden beschriebene Sensorknoten aufweist. Weiterhin weist das Sensornetzwerk eine zentrale Datensammel- und Auswerteeinheit zum Sammeln und Auswerten der übermittelten Messdaten auf.

Das Sensornetzwerk kann vollständig drahtlos ausgeführt sein und neben den verschiedenen Sensorknoten einen Datenkonzentrator und einen Anwendungsserver mit einer entsprechenden Software aufweisen. Dabei können Bestandteile bereits existierender Flugzeugsysteme durch das neue System genutzt werden. Dazu gehören die Hardware des Anwendungsservers und der kabelgebundene sogenannte Backbone-Bus.

Mit Hilfe des Sensornetzwerks wird eine umfassende Überwachung des Flugzeugzustandes ermöglicht. Die durch die Überwachung anfallenden Daten werden nicht durch das Sensornetzwerk selbst verarbeitet, sondern anderen Systemen (im Folgenden auch "Flugzeugnutzersysteme" genannt) zur Verfügung gestellt. Das Sensornetzwerk bietet somit einen umfassenden Dienst an und kann darüber hinaus eine Plattform zur Informationsversorgung verschiedenster Flugzeugnutzersysteme bereitstellen. So gehören Sensordaten zur Realisierung von Funktionen aus dem Kabinenbereich, wie z. B. die Sitzstatusüberwachung oder Klimaanlagenregelung, ebenso zu den bereitgestellten Daten, wie Sensorinformationen für den Flügelstatus, die Strukturüberwachung des Flugzeugs oder das Fahrwerk.

Auch Funktionen, welche über die Weiterleitung von Sensordaten hinausgehen, können mit dem Sensornetzwerk realisiert werden. So können beispielsweise im Flugzeug verbaute Leitungen zur Übertragung von Binärinformationen, sogenannte "Discrete Key Lines", durch eine Funktion des Sensornetzwerkes ersetzt werden. Die zu übertragende Information wird dabei wie eine Sensorinformation von einem Sensorknoten aufgenommen und zum Anwendungsrechner weitergeleitet, wo sie über eine Software-Schnittstelle dem Flugzeugnutzersystem bereitgestellt wird.

Die Erfindung stellt also eine Sensorplattform bereit, welche von einer großen Anzahl an "Nutzern" verwendet werden kann. Bei diesen Nutzern handelt es sich beispielsweise um Komponenten einer Klimaanlage, elektrische Komponenten in der Kabine und/oder im Cockpit, Stellelemente für die Tragflächen oder das Leitwerk, Fahrwerkskomponenten, etc.

Es kann somit eine flugzeugweite Sensorversorgung ermöglicht werden, wobei die Grundkomponenten der Sensorknoten (Energieversorgungseinheit und Sende- und Empfangseinheit) für alle Sensorknoten identisch ausgeführt sein können. Die verschiedenen Sensorknoten unterscheiden sich beispielsweise lediglich in den individuellen Sensoreinheiten zum erfassen der Messwerte.

Gemäß einem Beispiel sind die Energieversorgungseinheit, die Sensoreinheit und die Sende- und Empfangseinheit modular ausgeführt.

Gemäß einem weiteren Beispiel ist ein modulares Baukastensystem zur Bereitstellung eines oben und im Folgenden beschriebenen Sensornetzwerks angegeben.

Gemäß einem Beispiel ist die Energieversorgungseinheit zur autarken Energieversorgung des Sensorknotens durch Energieumwandlung ausgeführt. Auf diese Weise wird ein Sensorknoten bereitgestellt, der zur Überwachung und Steuerung mittels drahtloser Anbindung sowie autarker Stromversorgung ausgeführt ist.

Auf diese Weise können elektrische Leitungen entfallen.

Somit ist es möglich, den Sensorknoten auch an solchen Orten einzubauen, die für herkömmliche Sensoren bisher nicht zugänglich waren.

Die Energieumwandlung findet direkt am bzw. im Sensorknoten statt. Eine externe Strom-/Spannungsquelle ist nicht erforderlich.

Gemäß einem weiteren Beispiel weist die Energieversorgungseinheit einen Vibrationsgenerator zur dezentralen Energieversorgung des Sensorknotens auf. Der Vibrationsgenerator wandelt Vibrations- oder Beschleunigungsenergie, die im Flugzeug entsteht, in elektrische Energie um. Diese Energieumwandlung erfolgt beispielsweise induktiv.

Gemäß einem weiteren Beispiel weist die Energieversorgungseinheit einen thermoelektrischen Wandler zur dezentralen Energieversorgung des Sensorknotens auf.

Auf diese Weise ist es möglich, einen Temperaturunterschied zur Energiegewinnung auszunutzen.

Gemäß einem weiteren Beispiel weist die Energieversorgungseinheit eine Antenne zur Aufnahme elektromagnetischer Energie zur dezentralen Energieversorgung des Sensorknotens auf.

Die Antenne kann beispielsweise ähnlich ausgeführt sein, wie die Antenne eines RFID-Tags. Die gewonnene elektrische Energie kann beispielsweise in einem Kondensator gespeichert werden.

Gemäß einem weiteren Beispiel weist die Energieversorgungseinheit eine Photovoltaikeinheit zur Umwandlung von Licht in elektrische Energie zur dezentralen Energieversorgung des Sensorknotens auf.

An dieser Stelle sei explizit darauf hingewiesen, dass der Sensorknoten sowohl eine als auch mehrere der oben genannten Umwandlungseinheiten zur Erzeugung elektrischer Energie aufweisen kann. Beispielsweise kann sowohl ein Vibrationsgenerator als auch ein thermoelektrischer Wandler vorgesehen sein.

Gemäß einem weiteren Beispiel ist die Sende-/Empfangseinheit zur drahtlosen Übertragung der erfassten vorverarbeiteten Messwerte für zwei oder mehrere getrennte Frequenzbereiche ausgeführt.

Es ist somit eine Redundanz in der Übertragung vorgesehen. Je nach erforderlicher Übertragungssignalqualität und vorhandener möglicher Störsignale kann wahlweise einer oder mehrere Frequenzbereiche gewählt werden. Auch kann die Übertragung parallel in allen unterstützten Frequenzbereichen stattfinden.

Eine Kontrollinstanz trifft die Entscheidung über den zu verwendenden Frequenzbereich / die zu verwendenden Frequenzbereiche in Abhängigkeit bestimmter Kriterien, wie zum Beispiel Qualität des empfangenen Signals, gemessene Interferenzen oder zum Beispiel auch solcher Ereignisse wie einen Wechsel des Flugzustandes des Luftfahrzeuges (z.B. Wechsel von 'Cruise' auf 'Descent' oder Wechsel von 'Descent' auf 'Approach'). Diese Kontrollinstanz kann entweder zentral z.B. innerhalb der zentralen Datensammel- und Auswerteeinheit oder aber auch dezentral innerhalb der Sensorknoten implementiert sein.

Es ist also eine zentrale (oder dezentrale) Kontrollinstanz vorgesehen, welche die Entscheidung über die Wahl des verwendeten Frequenzbereichs / der Frequenzbereiche in Abhängigkeit bestimmter Kriterien, wie z.B. Signalqualität, gemessener Interferenz, Flugzustand des Luftfahrzeugs, etc. trifft.

Gemäß einem weiteren Beispiel ist die Sende-/Empfangseinheit somit so ausgeführt, dass sie den Frequenzbereich zur Übertragung bei Unterschreiten einer vorgegebenen Sendesignalqualität automatisch wechselt.

Insbesondere kann die Sende-/Empfangseinheit nicht nur Signale senden, sondern auch Signale empfangen. Beispielsweise kann die zentrale Datensammel- und Auswerteeinheit periodisch Testsignale an die Sende-/Empfangseinheit senden, welche dann von der Prozessoreinheit des Sensorknotens analysiert und ausgewertet werden. Auf diese Weise ist es möglich, dass die Sendeeinheit feststellt, welcher Frequenzbereich und / oder welcher Datenübertragungskanal der günstigste ist. In diesen Kanal kann dann automatisch gewechselt werden.

Ebenso ist es aber auch möglich, dass die zentrale Datensammel- und Auswerteeinheit die Qualität der von ihr empfangenen Signale misst und auf Basis des Messergebnisses die Sende-/Empfangseinheit anweist, einen bestimmten Kanal zu wählen, so dass stets optimale Datenübertragungsqualität gesichert ist.

Gemäß einem weiteren Beispiel ist die Sende-/Empfangseinheit so ausgeführt, dass sie den Frequenzbereich zur Übertragung bei eintreten eines Ereignisses automatisch wechselt. Ereignisse können z. B. das Detektieren von Interferenzen auf dem gerade verwendeten Hochfrequenz-Übertragungskanal sein. Weiterhin ist es möglich, dass Frequenzen bei der Änderung der Flugphase gewechselt werden, z.B. bei Wechsel von 'Cruise' auf 'Descent' oder von 'Descent' auf 'Approach'.

Gemäß einem weiteren Beispiel ist die Sende-/Empfangs-einheit zur Änderung der Sende-/Empfangsfrequenz auf Basis einer vorgegebenen Frequenzsprungfolge ausgeführt. In anderen Worten wird in diesem Ausführungsbeispiel die Sende-/Empfangsfrequenz automatisch gemäß einer vorab vereinbarten Sprungfolge variiert. Bei einem solchen Frequenzsprungverfahren kann schmalbandigen Störern ausgewichen werden.

Gemäß einem weiteren Beispiel ist die Sensoreinheit zur Erfassung eines Messwerts ausgeführt, bei dem es sich um eine Temperatur, eine Vibration, eine Beschleunigung, eine Hochfrequenz-Signalleistung, eine Dehnung, einen Druck oder eine Position sowie eine logische Adresse der angeschlossenen Sensoren/Sensorsystem zur Identifizierung von Systemkomponenten handeln kann.

Gemäß einem weiteren Beispiel ist ein Sensornetzwerk für ein Luftfahrzeug angegeben, welches einen oben und im Folgenden beschriebenen Sensorknoten sowie eine zentrale Datensammel- und Auswerteeinheit zum Sammeln und Auswerten der übermittelten (ggf. vorverarbeiteten) Messdaten aufweist.

Gemäß einem weiteren Beispiel sind die Sensorknoten sowie die zentrale Datensammel- und Auswerteeinheit zur Verschlüsselung der zu übermittelnden Daten ausgeführt. Auf diese Weise kann die Gefahr eines Missbrauchs bzw. die Gefahr, dass Daten eines Senders, der nicht zum Sensornetzwerk gehört, empfangen und berücksichtigt werden, vermieden werden.

Gemäß einem weiteren Beispiel ist das Sensornetzwerk zur Überwachung einer Belegung eines für die Übertragung vorgesehenen Frequenzbereichs sowohl am Installationsort des Sensorknotens als auch bei einer Sende- und Empfangsstation des Sensornetzwerks ausgeführt.

Gemäß einem weiteren Beispiel ist das Sensornetzwerk zur adaptiven Routenfindung zur Identifikation eines neuen Kommunikationsweges bei Unterschreiten einer vorgegebenen Sendesignalqualität ausgeführt.

An dieser Stelle sein darauf hingewiesen, dass in einem Luftfahrzeug sehr spezielle Bedingungen für die Ausbreitung der übermittelten Signale herrschen, insbesondere wenn es sich bei den drahtlos übertragenen Signale um Hochfrequenzsignale handelt. Eine Ursache hierfür ist darin zu sehen, dass das Flugzeug viele die Signale dämpfenden oder gar absorbierenden Elemente aufweist. Als Beispiel seien die Primär- und Sekundärstruktur, insbesondere die Wände und Abtrennungen im Rumpf des Flugzeugs und sonstige Einbauten genannt.

Aus diesem Grund kann erfindungsgemäß vorgesehen sein, dass das Sensornetzwerk in ein oder mehrere Unternetze aufgeteilt ist, die entsprechende Knoten (Datenkonzentratoren, Wireless Data Concentrators) zum Sammeln der Daten der Sensorknoten aufweisen. Diese Knoten können dann drahtlos und/oder kabelgebunden an die zentrale Datensammel- und Auswerteeinheit angeschlossen sein.

Gemäß einem weiteren Beispiel ist ein Luftfahrzeug mit einer Systemkomponente und einem oben und im Folgenden beschriebenen Sensornetzwerk zum Ermitteln eines Zustands der Systemkomponente angegeben.

Gemäß einem weiteren Beispiel ist ein Verfahren zum Ermitteln eines Zustands einer Systemkomponente in einem Luftfahrzeug angegeben, bei dem ein Sensorknoten mit elektrischer Energie durch eine Energieversorgungseinheit im Sensorknoten versorgt wird. Auch können weitere Sensorknoten durch eigene Energieversorgungseinheiten mit Energie versorgt werden. Weiterhin erfolgt die Erfassung von Messwerten im Bereich der Systemkomponente durch den Sensorknoten. Andere Sensorknoten können weitere Messwerte anderer Systemkomponenten oder Einbauten des Luftfahrzeugs erfassen. Falls erwünscht erfolgt eine Vorverarbeitung der erfassten Messwerte innerhalb des Sensorknotens durch einen eigens dafür vorgesehenen Prozessor. Daraufhin erfolgt die drahtlose Übertragung der erfassten (ggf. vorverarbeiteten) Messwerte an eine zentrale Datensammel- und Auswerteeinheit. Danach erfolgt die Durchführung eines Wechsels des Frequenzbereichs zur Übertragung der erfassten Messwerte in Abhängigkeit von einem Wechsel des Flugzustands des Luftfahrzeugs.
Fig. 1 zeigt einen Sensorknoten gemäß einem Ausführungsbeispiel der Erfindung.
Fig. 2 zeigt ein Sensornetzwerk gemäß einem Ausführungsbeispiel der Erfindung.
Fig. 3 zeigt ein Luftfahrzeug gemäß einem Ausführungsbeispiel der Erfindung.
Fig. 4 zeigt ein Flussdiagramm eines Verfahrens gemäß einem Ausführungsbeispiel der Erfindung.
Fig. 5 zeigt eine Sensorknotenplattform (Sensornetzwerk) gemäß einem Ausführungsbeispiel der Erfindung.
Fig. 6 zeigt eine weitere Darstellung eines Sensornetzwerks gemäß einem Ausführungsbeispiel der Erfindung.
Fig. 7 zeigt ein Hochauftriebssystem, welches mit Sensorknoten gemäß einem Ausführungsbeispiel der Erfindung ausgestattet ist.
Fig. 8 zeigt einen drahtlosen Drehmoment-Limiter mit Sensorik.
Fig. 9 zeigt ein Anwendungsbeispiels für einen GRA-Feuchtigkeitssensor gemäß einem Ausführungsbeispiel der Erfindung.
Fig. 10 zeigt die Temperaturerfassung im Rumpf gemäß einem weiteren Ausführungsbeispiel der Erfindung.
Fig. 11 zeigt ein Wasserleitungssystem, welches mit einem Temperatursensorknoten gemäß einem weiteren Ausführungsbeispiel der Erfindung ausgerüstet sein kann.
Fig. 12 zeigt ein Brandmeldesystem, welches mit Sensorknoten gemäß einem weiteren Ausführungsbeispiel der Erfindung ausgerüstet sein kann.
Fig. 13 zeigt ein drahtloses Steuersystem für eine Notbeleuchtung mit Sensorknoten gemäß einem weiteren Ausführungsbeispiel der Erfindung.
Fig. 14 zeigt ein Türüberwachungssystem mit Sensorknoten gemäß einem weiteren Ausführungsbeispiel der Erfindung.
Fig. 15 zeigt die Strukturüberwachung in einem Flugzeug gemäß einem weiteren Ausführungsbeispiel der Erfindung.
Fig. 16 zeigt den Einsatz eines Sensorknotennetzwerks zur Sitzidentifikation und Lokalisierung gemäß einem weiteren Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

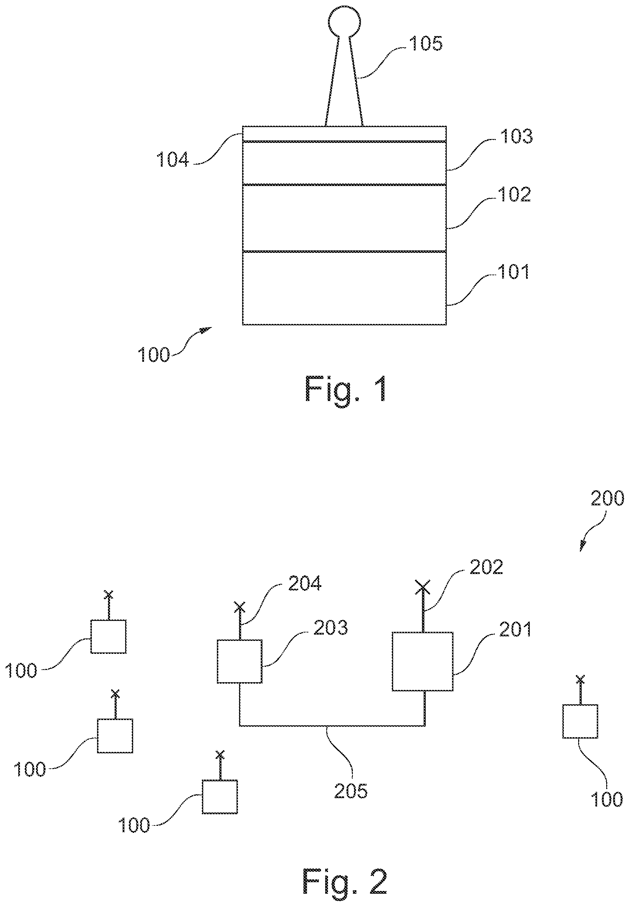

Fig. 1 zeigt einen Sensorknoten 100. Der Sensorknoten weist eine Sensoreinheit 101, eine Energieversorgungseinheit 102, eine Prozessoreinheit zur Vorverarbeitung der Messdaten (Controller) 103 sowie eine Sende-/Empfangseinheit (Transceiver) 104 mit einer Sende-/Empfangsantenne 105 auf.

Die Partitionierung des Sensorknotens muss nicht in Form von einzelnen physikalischen Baueinheiten vorliegen. Vielmehr können auch funktionale Einheiten vorliegen, die Teil eines zusammenhängenden Moduls sind. Es ist zum Beispiel möglich, dass die Prozessor- und Sende-/Empfangseinheiten auf einem physikalischen Halbleiterchip integriert sind.

Weiterhin können Befestigungen zur Anbringung des Sensorknotens an ein Strukturbauteil des Flugzeugs bzw. einer Systemkomponente vorgesehen sein.

Der Sensorknoten ist mit geringem Installations- und Wartungsaufwand an eine zentrale Datensammel- und Auswerteeinheit angebunden. Im Luftfahrzeug können eine Vielzahl solcher Sensorknoten 100 vorgesehen sein, die an verschiedensten Orten innerhalb und außerhalb des Luftfahrzeugs angebracht sein können.

Die Sensoreinheiten der Sensorknoten können z. B. Temperatur, Vibration, Beschleunigung, Hochfrequenz-Signalleistung, Dehnung, Druck, Lage/Ort, etc. erfassen, oder auch logische Adressen angeschlossener Sensoren / Sensorsysteme zur Ermittlung der Identität einer Systemkomponente ermitteln und übertragen. Mittels dieser sensorbasierten Erfassung verschiedenster Parameter lässt sich die Wartung, der Betrieb und der Bau des Flugzeugs effizienter gestalten. Beispielsweise kann jeder Sensorknoten seine gemessenen Messdaten (ggf. nach einer Vorverarbeitung und Filterung/Analyse) zusammen mit der Position oder Identifikationsnummer des jeweiligen Sensors an die zentrale Datensammel- und Auswerteeinheit senden. Auf diese Weise ist es möglich, jeden ermittelten Messwert einem bestimmten Ort im Flugzeug zuzuordnen, so dass die Wartung des Flugzeugs aber auch die Optimierung bestehender und die Entwicklung neuer Flugzeugmuster unterstützt und erleichtert werden können.

Die Anbindung der Sensoren bzw. Sensorknoten an die zentrale Datensammel- und Auswerteeinheit erfolgt mittels des Einsatzes drahtloser Übertragungstechnik, was die Anbindung der Sensorknoten ohne zusätzlichen infrastrukturellen Aufwand (z. B. elektrische oder optische Leitungen) ermöglicht.

Der Vorteil der drahtlosen Datenübertragung erschließt sich insbesondere dann, wenn auch die Energieversorgung der Sensoren in autarker Weise erfolgt. Die beschriebenen Sensorknoten ermöglichen eine drahtlose Übermittlung von Sensordaten innerhalb des Luftfahrzeugs sowie eine autarke Umwandlung der von den Sensorknoten benötigten Energie am oder in der Nähe des Einbauortes der entsprechenden Sensoren.

Somit ist keine Verbindung der Sensorknoten über dediziert dafür vorgesehene Leitungen mit dem jeweiligen Erfassungssystem notwendig.

Fig. 2 zeigt ein Sensornetzwerk 200 mit mehreren Sensorknoten 100, einer zentralen Datensammel- und Auswerteeinheit 201 mit einer Sende-/Empfangsantenne 202 sowie einer weiteren Sende-/Empfangsstation 203 mit entsprechender Sende-/Empfangsantenne 204, die als sog. Wireless Data Concentrator (WDC) dient.

Die verschiedenen Sensorknoten 100 können entweder über den Wireless Data Concentrator 203 mit der zentralen Datensammel- und Auswerteeinheit 201 oder direkt mit der zentralen Datensammel- und Auswerteeinheit kommunizieren. Der Wireless Data Concentrator 203 kann über eine kabelgebundene Kommunikationsverbindung 205 oder kabellos mit der Zentrale 201 kommunizieren.

Im Folgenden wird die Auslegung des Drahtlos-Sensornetzwerks gemäß einem Ausführungsbeispiel der Erfindung beschrieben:
Das drahtlose Sensornetzwerk 200 für den Betrieb im Flugzeug erfüllt die Anforderungen hinsichtlich einer sicheren Daten-/Informationsübertragung in Flugzeugen. Dies gilt insbesondere auch dann, wenn das Sensornetzwerk zu Flugsicherheits-relevanten Zwecken verwendet oder die übertragenen Daten direkte oder indirekte Auswirkung auf die Flugsicherheit haben.

Da der drahtlose Übertragungskanal (z. B. der Funkkanal) in der Regel anfällig gegenüber Störungen ist, ist er redundant ausgelegt. Um die Wahrscheinlichkeit eines Ausfalls der drahtlosen Übertragungsstrecke zu minimieren, werden beispielsweise mindestens zwei getrennte Frequenzbereiche für die Übertragung verwendet. Diese Frequenzbereiche sind im Frequenzbereich so weit voneinander separiert, dass eine gemeinsame und zeitgleiche Störung durch eine einzelne Störquelle unwahrscheinlich ist.

Eine mögliche Auslegung der Übertragungstechnik besteht darin, dass ein Transceiver-Paar, welches den Grad der Interferenz über geeignete Indikatoren (z. B. über eine Interferenzleistungsmessung oder über die Messung einer Bitfehlerrate während der Übertragung) ermittelt, den Frequenzbereich bei Überschreitung einer definierten maximalen Störleistung bzw. Bitfehlerrate wechselt und so die Störung meidet.

Eine weitere Auslegung besteht darin, dass ein Transceiver-Paar seine Sende-/Empfangsfrequenz nach einer vorab vereinbarten Sprungfolge variiert.

In Kombination mit Techniken zur Fehlervermeidung, wie beispielsweise eine entsprechende Fehlerkorrektur (Forward Error Correction) und Fehlererkennung (Cyclic Redundancy Check), kann auf diese Weise eine ausreichende Übertragungsqualität sichergestellt werden.

Um eine möglichst zuverlässige Datenübertragung zwischen den Sensorknoten und der zentralen Datensammel- und Auswerteeinheit zu gewährleisten, kann die Belegung des/der für die Datenübertragung vorgesehenen Frequenzbereichs/e sowohl am Installationsort des jeweiligen Sensorknotens als auch der für drahtlose Kommunikation vorgesehenen Sende-/Empfangsstationen 203 (Wireless Data Concentrator) überwacht werden.

Hierzu nimmt sowohl der Empfänger des Sensorknotens als auch der des Wireless Data Concentrator periodisch Messungen der spektralen Leistungsdichte innerhalb der vorgesehenen Frequenzbänder vor. Das Ergebnis wird dann an die Kontrollinstanz innerhalb des Wireless Data Concentrator zurückgemeldet. Basierend auf den Ergebnissen dieser Messungen kann der Access Point so eine Entscheidung über die Verwendung von für die zuverlässige Datenübertragung geeigneter Frequenzbereiche treffen und so ggf. proaktiv einen Wechsel des Übertragungsfrequenzbereichs veranlassen. Je nach verwendetem Übertragungsverfahren (Festfrequenz- oder Frequenzsprungverfahren) kann ein solcher Wechsel in einem Wechsel des gesamten Frequenzbereichs oder der Aussparung der belegten/gestörten Teilfrequenzbereiche aus der Frequenzsprungfolge bestehen.

Sollte es trotz der Durchführung der oben beschriebenen Verfahren zum Ausfall der Kommunikationsverbindung zwischen dem Sensorknoten und der zentralen Datensammel- und Auswerteeinheit kommen, wird mittels adaptiver Routenfindung versucht, einen neuen Kommunikationsweg über benachbarte, in Funkreichweite befindliche Sensorknoten aufzubauen.

Sollte der eigentliche, für die Erfassung des jeweiligen physikalischen Parameters verantwortliche Sensorknoten ausfallen und somit ein Messdatum fehlen, wird mittels der vorhandenen Messdaten der Nachbarsensoren versucht, im Rahmen vorgegebener Regeln einen Messwert für den ausgefallenen Sensor zu schätzen. Ein Beispiel für eine solche Regel kann eine lineare Interpolation zwischen den Messwerten örtlich benachbarter Sensoren sein.-

Im Folgenden wird die Energieversorgung der drahtlosen Sensorknoten gemäß einem Ausführungsbeispiel der Erfindung beschrieben:
Innerhalb des Luftfahrzeugs bestehen mehrere Möglichkeiten der Energiewandlung durch die Energieversorgungseinheit des Sensorknotens, welche im Folgenden aufgeführt sind.

Beispielsweise können in den Bereichen, in denen größere Vibrationen der Flugzeugstruktur auftreten (z. B. in der Nähe der Triebwerke), Vibrationsgeneratoren zur dezentralen Energieversorgung von Sensorknoten installiert werden. Die mechanische Vibrationsenergie in Form von Spannung oder Stauchung kann zudem über an den Tragflächen angebrachten piezoelektrischen Wandlern in elektrische Energie umgewandelt werden.

Für die dezentrale Erzeugung elektrischer Energie aus Temperaturunterschieden, wie sie z. B. zwischen der Außenseite des Flugzeugs und dem klimatisierten Innenbereich (z. B. Kabine) sowie Laderaumbereichen (Cargo-Compartments) und den Bereichen für Elektroinstallationen (Electronic Bays), oder zwischen dem Klimasystem und dem Innenbereich auftreten, werden thermoelektrische Wandler eingesetzt. Die thermoelektrischen Wandler sind thermisch leitend an die Flugzeughülle angekoppelt. Die Temperaturunterschiede zwischen diesen Bereichen können dabei mehr als 80°C betragen. Des weiteren können thermoelektrische Wandler auch an Leitungen (z. B. Zapfluftleitungen (Bleed Air Leitungen) oder Klimarohre), durch die warme Luft strömt, angebracht werden.

Weiterhin ist es möglich und vorgesehen, elektrische Energie aus den im Flugzeug vorhandenen elektromagnetischen Feldern mittels Auskopplung über geeignete Antennen zu gewinnen.

Weiterhin ist es ebenso möglich und vorgesehen, Licht in elektrische Energie mittels Photovoltaik umzuwandeln. Beispielsweise können Lichtquellen oberhalb der Kabinendeckenverkleidung angebracht werden, mittels derer dann verteilte Sensoren in Sichtweite zu diesen Lichtquellen mit Energie versorgt werden, indem das Licht in Strom umgewandelt wird.

Die einzelnen Komponenten (Sende-/Empfangseinheit, Prozessoreinheit, Energieversorgung, Sensoreinheit) der einzelnen Sensorknoten sind beispielsweise als Module mit standardisierten Schnittstellen ausgeführt. Auf diese Weise ist eine flexible Anpassung der Funktionalität des jeweiligen Sensorknotens an die gegebenen Erfordernisse möglich.

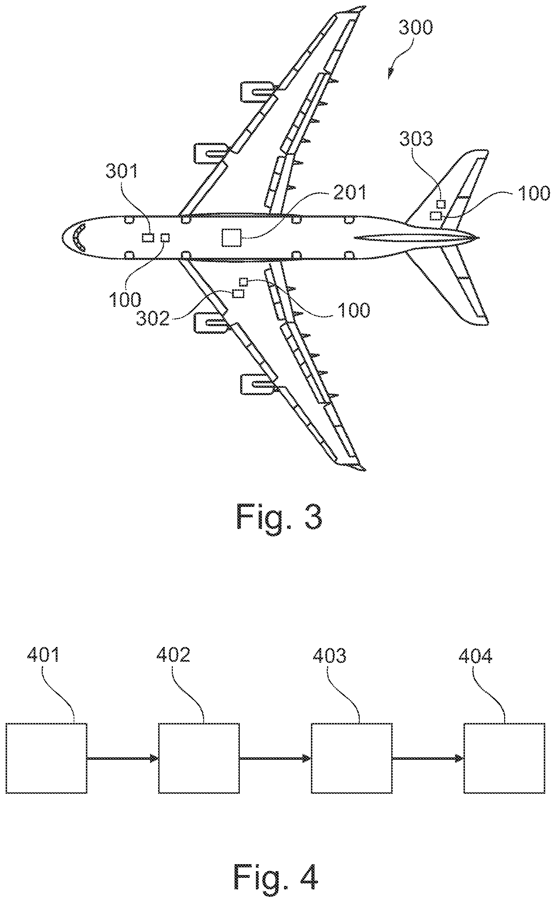

Fig. 3 zeigt ein Luftfahrzeug 300 mit einem oben beschriebenen Sensornetzwerk 200 sowie zu überwachenden Systemkomponenten 301, 302, 303, die im Flügel, im Leitwerk und/oder im Rumpf angeordnet sein können.

Fig. 4 zeigt ein Flussdiagramm eines Verfahrens, bei dem in Schritt 401 verschiedene Sensorknoten mit elektrischer Energie versorgt werden. Die Gewinnung der elektrischen Energie erfolgt hierbei durch eigene Generatoren, die in den jeweiligen Sensorknoten installiert sind. In Schritt 402 erfolgt die Erfassung von Messwerten im Bereich der zu überwachenden Systemkomponenten durch die entsprechenden Sensorknoten. In Schritt 403 erfolgt eine Vorverarbeitung und ggf. Analyse der erfassten Messwerte und in Schritt 404 werden die vorab verarbeiteten Messwerte an eine zentrale Datensammel- und Auswerteeinheit kabellos übertragen.

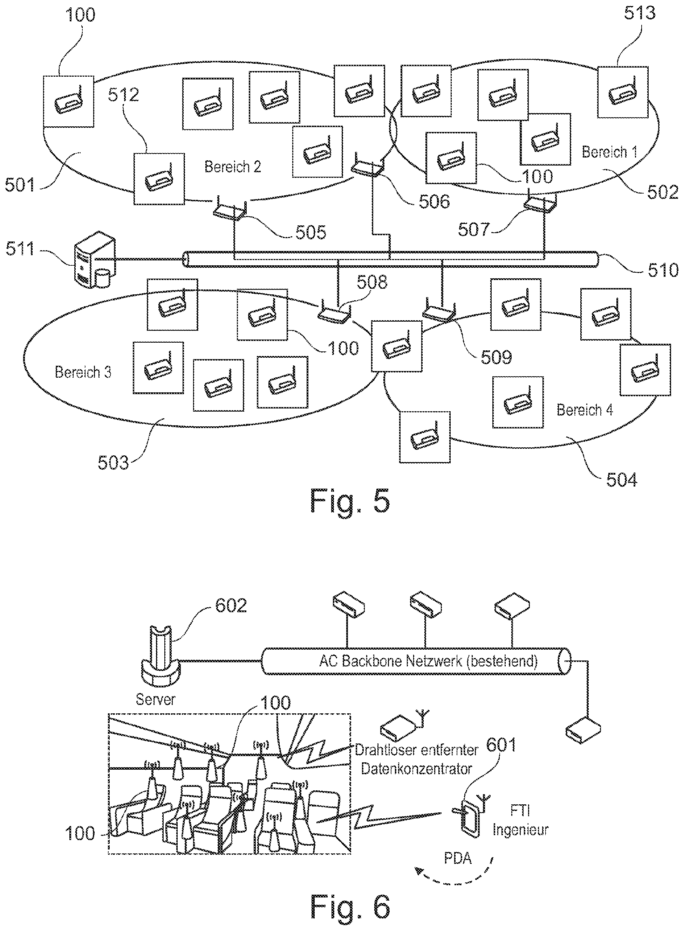

Fig. 5 zeigt ein Sensornetzwerk, das eine Sensorknotenplattform bereitstellt und eine Vielzahl an teilweise identischen, teilweise unterschiedlichen Sensorknoten, wie sie weiter oben und im Folgenden beschrieben sind, aufweist. Jeder der Sensorknoten kann eine Sensoreinheit aufweisen, um damit Messwerte zu erfassen. Die verschiedenen Sensorknoten können in einer Vielzahl an Bereichen 501, 502, 503, 504 angeordnet sein. Der Bereich 501 betrifft beispielsweise die Hochauftriebsklappen der Tragflächen, der Bereich 502 betrifft beispielsweise das Fahrwerk, der Bereich 503 betrifft beispielsweise die Klimaanlage an Bord des Luftfahrzeugs und der Bereich 504 betrifft beispielsweise die Cockpittür. Natürlich können noch weitere Bereiche vorgesehen sein.

Jeder Bereich 501 bis 504 kann einen oder mehrere Datenkonzentratoren 505 bis 509 aufweisen, die mit den Sensorknoten 100 drahtlos kommunizieren können und die Daten der ihnen zugewiesenen Sensorknoten sammeln können. Diese Datenkonzentratoren sind an den "Backbone" 510 angeschlossen, bei dem es sich um ein herkömmliches BusSystem handeln kann, welches an den Zentralserver 511 angeschlossen ist.

Weiterhin können bestimmte Sensorknoten (siehe beispielsweise Sensorknoten 512, 513) vorgesehen sein, welche die Informationen verschiedener Sensoren aufnehmen. Diese Informationen werden verschiedenen Flugzeugnutzersystemen über eine Software-Schnittstelle zur Verfügung gestellt.

Das Sensornetzwerk kann derart komplex ausgeführt sein, dass nicht nur die Detektion von Messdaten verschiedenster Flugzeugnutzersysteme erfolgen kann. Vielmehr kann das Sensornetzwerk auch eine Diagnose und/oder Prognose durchführen. Hierunter ist zu verstehen, dass Fehlfunktionen der entsprechenden Flugzeugnutzersysteme diagnostiziert, identifiziert und gemeldet werden können. Weiterhin kann die zu erwartende Entwicklung physikalischer Parameter (z.B. eine Temperaturentwicklung, etc.) prognostiziert werden. Im übrigen kann das Sensornetzwerk auch für Servicezwecke eingesetzt werden. Beispielsweise können Füllstände von Schmierfluiden oder hydraulischen Fluiden gemessen werden. Manuelle Messungen der Füllstände sind nicht notwendig, können aber zusätzlich durchgeführt werden.

Im Übrigen können mit Hilfe des Sensornetzwerks Luftfahrzeugteile/Systeme/Subsysteme/Ausrüstung automatisch identifiziert werden.

Weiterhin kann das Sensornetzwerk dazu eingesetzt werden, Daten von elektronischen Komponenten, die nicht an den Datenbus des Luftfahrzeugs angebunden sind, zu übertragen.

Die einzelnen Sensoren können auch zur Lokalisierung von Flugzeugkomponenten eingesetzt werden. Durch die modulare Ausführungsform der einzelnen Sensorknoten kann die Sensorplattform flexibel genutzt werden. Eine zusätzliche Verdrahtung ist nicht erforderlich und der Einbau ist einfach und sehr flexibel.

Beispielsweise werden für die Sensorknoten modulare Komponenten verwendet, so dass die individuellen Sensorknoten schnell und effektiv konfiguriert werden können. Die Komponenten können als Baukastensystem mit standardisierten Steckverbindungen bereitgestellt werden.

Fig. 6 zeigt eine Flugtestinstallation (FTI) unter Verwendung eines Sensornetzwerks gemäß einem Ausführungsbeispiel der Erfindung. Da keine Verdrahtung der einzelnen Sensoren erforderlich ist, kann der Installationsaufwand reduziert werden. Fig. 6 zeigt ein Testszenario, welches beispielsweise zur Temperaturerfassung in der Kabine eingesetzt werden kann. Das Endterminal 601, welches beispielsweise von einem FTI-Ingenieur bedient wird, sammelt die gemessenen Temperaturwerte der unterschiedlichen Sensorknoten 100 und kann beispielsweise in Form eines mobilen Geräts, wie ein PDA oder ein Notebook, ausgeführt sein. Auch kann das Gerät 601 in Form eines drahtlosen Datenkonzentrators (Wireless Remote Data Concentrator, RDC) ausgeführt sein, der die erfassten Sensordaten an ein anderes System, beispielsweise einen Wartungsserver 602, zur weiteren Auswertung oder Speicherung überträgt.

Mit dem mobilen Gerät 601 kann sich der Ingenieur frei durch die Kabine bewegen, um die bestimmten drahtlosen Sensorknoten 100 zu steuern und beispielsweise die physikalischen Messgrößen, die Abtastraten der Sensorknoten, etc. einzustellen oder den Systemstatus abzufragen. Auch kann das mobile Gerät 601 zur Neuinitialisierung einer Komplettmessung eingesetzt werden, wenn neue Sensorknoten hinzugekommen sind.

Insbesondere kann hierdurch der Aufwand sowohl bei der Installation als auch bei der Messung minimiert werden.

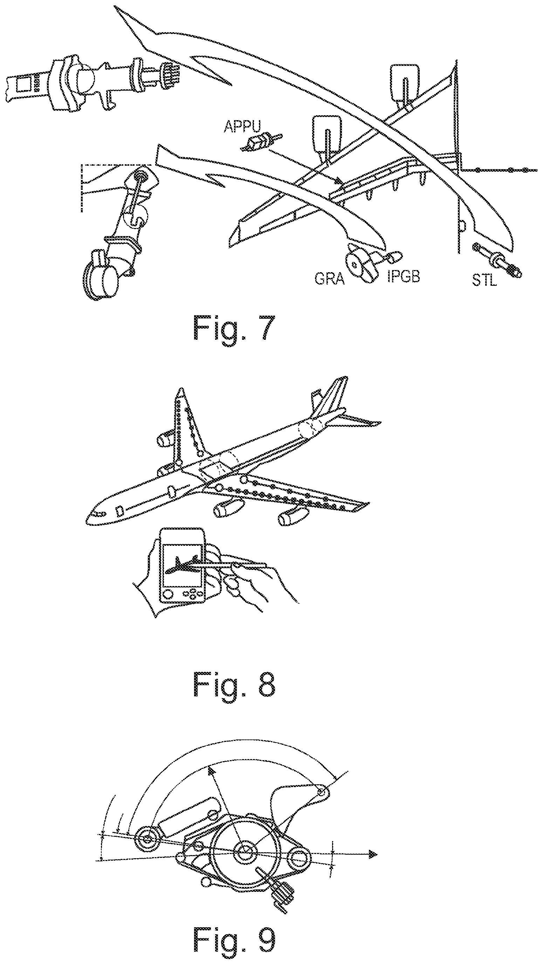

Fig. 7 zeigt ein Hochauftriebssystem für den Flügel eines Luftfahrzeugs, welches Sensorknoten gemäß einem Ausführungsbeispiel der Erfindung aufweist. Beispielsweise kann ein sogenannter Drehmomentlimiter (Torque Limiter) Sensor eingesetzt werden, um die Position eines Indikatorhebels des Klappenantriebgetriebes schnell und einfach zu bestimmen. Dieser Sensorknoten 100 (nicht dargestellt in Fig. 7) kann zusätzlich mit einem PDA drahtlos kommunizieren. Falls mehrere Sensoren im Luftfahrzeug installiert sind, können diese sequenziell oder separat abgefragt werden. Eine visuelle Inspektion der einzelnen Drehmomentlimiter ist im Falle einer Fehlfunktion nicht erforderlich. Vielmehr reicht es aus, über die drahtlose Steuerung (PDA) den entsprechenden Drehmomentlimiter zu identifizieren und die Messdaten auf dem PDA-Display darzustellen oder im Flugzeug anzuzeigen.

Allgemein gilt für dieses und die anderen Ausführungsbeispiele, dass anstelle der Repräsentation der Sensorinformationen auf einem mobilen Gerät die Daten auch gesammelt und in einer globalen Datenbank synchronisiert werden können, welche im Luftfahrzeug vorgesehen ist.

In das Sensornetzwerk können auch sogenannte GRA-Feuchtigkeitssensoren (GRA steht für "Geared Rotary Actuator") eingebunden werden. Der Wasseranteil im Fluid des rotierenden Aktuators (siehe Fig. 9) kann durch die Installation eines Feuchtigkeitssensors überwacht werden. Auf diese Weise ist es möglich, eine Vorhersage für den Zeitpunkt eines Spülmittelaustausches zu treffen und somit eine Fehlfunktion des Gerätes zu vermeiden.

Die drahtlosen Sensorknoten können beispielsweise als Retrofit-Lösung angeboten werden, und somit nachgerüstet werden. Auch hier ist es möglich, dass durch einen Knopfdruck im mobilen Gerät (beispielsweise ein PDA) die GRA's identifiziert werden, welche gewartet werden müssen. Die Darstellung kann sowohl auf dem PDA als auch auf einem zentralen Wartungssystem im Cockpit erfolgen.

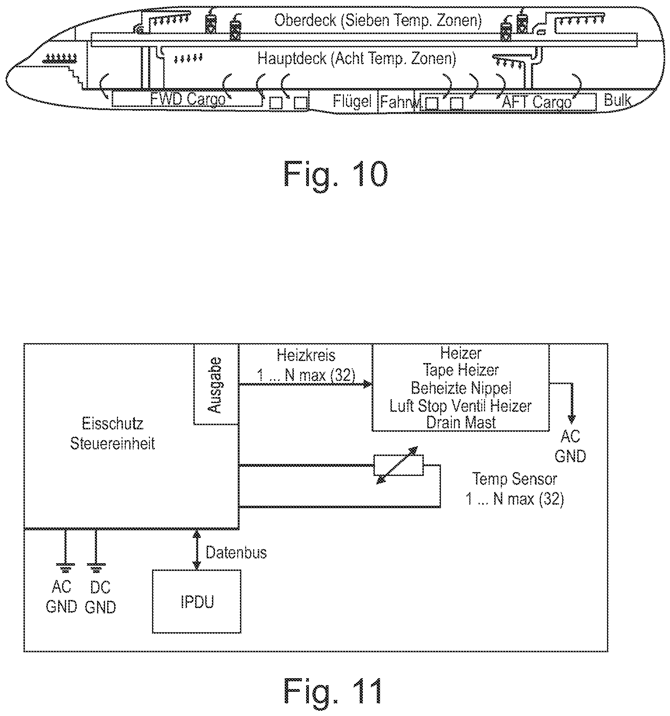

Wie in Fig. 10 zu sehen, können einzelne Sensorknoten auch zur Temperaturüberwachung von Oberdeck, Hauptdeck und Laderäumen eingesetzt werden. Da die Sensorknoten drahtlos in das Netzwerk eingebunden werden können, ist keine Verkabelung notwendig und insbesondere kein drahtgebundener Anschluss an die Hauptsteuerung der Klimaanlage. Jeder Sensorknoten kann seine gemessenen Temperaturwerte drahtlos an die Hauptsteuerung übertragen. Durch die Implementierung einer großen Anzahl an einzelnen Sensorknoten kann die Regelung der Klimaanlage verbessert werden.

Einzelne Sensorknoten können auch zur Überwachung der Heizung in den Bodenpaneelen eingesetzt werden. Auf diese Weise können die Heizschaltungen drahtlos überwacht und ggf. auch gesteuert werden.

Fig. 11 zeigt eine Architektur eines Eisschutzsystems der Wasserleitungen eines Luftfahrzeugs. Dieses System soll die Bildung von Eis in und um den Leitungen vermeiden. Drahtlose Temperatursensorknoten sind beispielsweise in den Wasserleitungen und/oder den Heizelementen integriert, so dass die aktuellen Temperaturbedingungen überwacht und die Heizelemente entsprechend gesteuert werden können.

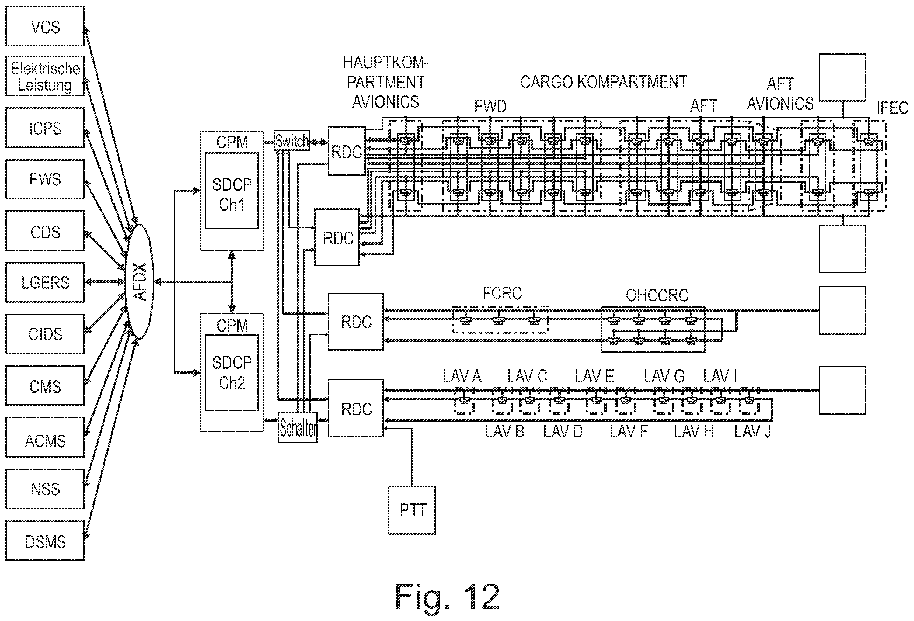

Auch können die Sensorknoten für ein Feuer- und Rauchdetektionssystem eingesetzt werden. Die Architektur eines Feuer-/Rauchdetektionssystems in einem bedruckten Kabinenbereich ist beispielsweise in Fig. 12 gezeigt. Die Datenkommunikation zwischen den einzelnen Feuer-/Rauchdetektoren und der Steuerungsfunktion wird hierbei drahtlos durch die feuer-/rauchdetektierenden Sensorknoten bereitgestellt. Drahtgebundene Verbindungen zu den Kommunikationsbussen ist nicht erforderlich. Anstelle einer CAN-Datenschnittstelle kann zum Steuern der Feuer-/Rauchdetektionssteuerfunktion ein drahtloses Gateway genutzt werden.

Weiterhin ist es möglich, die Sensorknoten für ein Lichtsteuersystem zu verwenden.

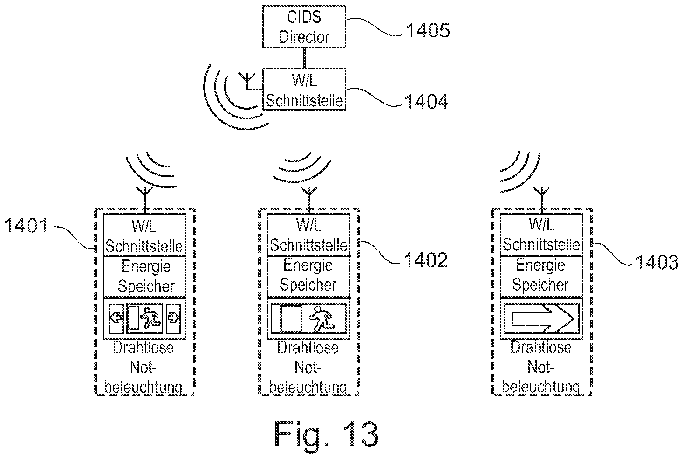

Auch ist es möglich, einige der Sensorknoten für ein Notbeleuchtungssystem zu verwenden, um dessen Funktion zu überwachen. Fig. 13 zeigt den Aufbau eines solchen Überwachungssystems. Es sind mehrere Sensorknoten 1401, 1402, 1403 vorgesehen, welche in die entsprechenden Notbeleuchtungseinheiten integriert sind und hierfür auch entsprechende Energiespeicher aufweisen. Die Sensorknoten kommunizieren drahtlos mit einer W/L Schnittstelle 1404, welche an den sogenannten CIDS Director 1405 gekoppelt ist.

Die Notbeleuchtungen sind also autarke Systeme, welche eine Lebensdauer von mehreren Jahren aufweisen können. Dies bedeutet, dass die drahtlosen Notbeleuchtungen ausreichende Energiereserven aufweisen, um die Kommunikation (beispielsweise zum kontinuierlichen Statusreport) sowie die Aktivierung der Lichter für einen bestimmten Zeitraum (beispielsweise zehn Minuten) über mehrere Jahre hin zu gewährleisten.

Auch können einige der Sensorknoten in einem freistehenden Identifikationssystem (Standalone Identification System, SIS) eingesetzt werden, um Konfigurationsinformationen von bestimmten Flugzeugnutzungssystemen bereitzustellen. Hierfür können kleine energieeffiziente drahtlose Transceiver eingesetzt werden, die auch Daten speichern können und in ein SIS-Modul integriert sind.

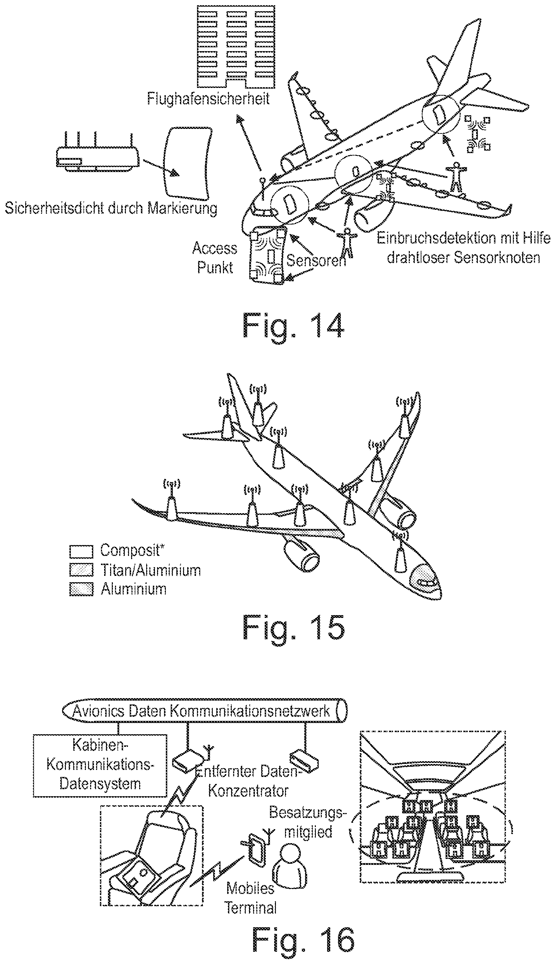

Fig. 14 zeigt den Einsatz erfindungsgemäßer Sensorknoten 100 zur Überwachung von Türen. Auf diese Weise kann detektiert werden, ob Türen oder Klappen geöffnet sind bzw. ob gerade ein gewaltsamer Eintritt erzwungen werden soll.

Hierfür können beispielsweise Bewegungssensoren und/oder Schalter zum Einsatz kommen. Nachdem ein bestimmter Vorgang zuverlässig von einem einzelnen oder einer Sensorgruppe detektiert worden ist, wird eine Alarmnachricht drahtlos an einen zentralen Access Point, der sich in der Nähe der Tür befindet, übertragen. Dieser Access Point kann dann die Alarmnachricht an ein System übermitteln, welches beispielsweise eine Warnung an die Sicherheitskräfte des Flughafens absetzt.

Gemäß einem weiteren Ausführungsbeispiel können die Sensorknoten für sogenannte "Discrete Key Lines" eingesetzt werden.

Weiterhin ist es möglich, die Sensorknoten zur Strukturüberwachung (Structural Health Monitoring) einzusetzen, bei dem kontinuierlich und autonom Verspannungen, Umgebungs- und Flugparameter und Defekte, etc. überwacht werden. Hierfür sind integrierte Sensoren vorgesehen, wie dies beispielsweise in Fig. 15 gezeigt ist.

In einem weiteren Ausführungsbeispiel ist es vorgesehen, die Sensorknoten als Näherungsschalter (Proximity Switches) für sogenannte PAX-Sitze einzusetzen. Hierdurch können Wartungszeiten verkleinert werden, da die Sensorknoten den Sitzstatus erfassen und drahtlos an eine Hauptsteuerung übermitteln oder das Flugzeug/Wartungspersonal informieren. Beispielsweise können auf diese Weise Beschädigungen der Sitzgurte detektiert werden, indem mechanisch integrierte drahtlose Sensorknoten in den Sitzgurt integriert sind.

Auch können Sensorknoten zur Identifikation und Lokalisierung von Ausrüstungsgegenständen eingesetzt werden. Dies bietet sich beispielsweise für Rettungswesten oder Sitze an, in welche die Sensorknoten eingebaut werden können. Die Lokalisierung der eingebauten Sensorknoten ist möglich, da diese Funktionalität im Sensornetzwerk inhärent vorhanden ist. Sollte eine sehr genaue Lokalisierung in der Größenordnung von wenigen Zentimetern notwendig sein, können die Eigenschaften des Sensornetzwerks mit detektierten Lokalisationsmechanismen kombiniert werden, beispielsweise die empfangene Leistung oder die Zeitverzögerung bei der Datenübertragung.

Gemäß einem weiteren Ausführungsbeispiel der Erfindung können die Sensorknoten zur Lokalisierung und Verfolgung von Passagieren und zur Sitzidentifikation und Lokalisierung eingesetzt werden. Dies ist in Fig. 16 gezeigt. Hierfür kann ein sogenannter Digitaler Boarding Assistent (DIGI BA) eingesetzt werden, welcher einen entsprechenden Sensorknoten aufweist. Hierbei handelt es sich beispielsweise um eine Vorrichtung von der Größe einer Kreditkarte, die einen RF-Transceiver, ein Display, einen Piepser und Eingabeknöpfe aufweist und von einer Batterie gespeist wird. Diese Vorrichtung kann den Passagieren beispielsweise als Mitgliedskarte für ein Vielfliegerprogramm oder als Boardingpass beim Check-in übergeben werden.

Eine solche Einrichtung wird von jedem Passagier in der Kabine mitgeführt und sendet periodisch Datenpakete an den zentralen Server. Auf diese Weise ist es möglich, den aktuellen Aufenthaltsort jedes Passagiers zu erfassen.

Die Sensorknoten können auch im Fahrwerk eingesetzt werden, um den Zustand der Bremssysteme, den Öldruck oder den Luftdruck der Reifen zu überwachen.

Auch kann das Ausfahren bzw. Einfahren des Fahrwerks überwacht werden.

Weitere Sensorknoten können zur Temperaturüberwachung der Bremsen eingesetzt werden oder zur Überwachung des Öldrucks und der Temperatur des Fahrwerks. Auch können Sensorknoten zur Überwachung und zur Zustandsanzeige der Bremsen eingesetzt werden (Brake Wear Monitoring).

Die Sensorknoten können auch zur Überwachung des Landeklappensystems eingesetzt werden (Landing Gear Health Monitoring System). Hierbei können Schläge und Spannungen auf die Landeklappen, Beschleunigungen, Druck, Feuchtigkeit, Temperatur der Bremsen und weitere Parameter gemessen werden. Die Sensordaten können drahtlos an entsprechende Empfänger (RDCs) übertragen werden, die im Laderaum untergebracht sind, oder direkt an den avionischen Server.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Sensorknoten für ein drahtloses Sensornetzwerk zur Erfassung von Messwerten in einem Luftfahrzeug, der Sensorknoten (100) aufweisend:
eine Sensoreinheit (101) zum Erfassen der Messwerte;
eine Energieversorgungseinheit (102) zur Versorgung des Sensorknotens mit elektrischer Energie;
eine Sende- und Empfangseinheit (104) zur drahtlosen Übertragung der erfassten vorverarbeiteten Messwerte an eine zentrale Datensammel- und Auswerteeinheit (201) ;
**dadurch gekennzeichnet, dass**
der Sensorknoten zur Durchführung eines Wechsels des Frequenzbereichs zur Übertragung der erfassten vorverarbeiteten Messwerte in Abhängigkeit von einem Wechsel des Flugzustands des Luftfahrzeugs ausgeführt ist.

2. Sensorknoten nach Anspruch 1,
wobei die Energieversorgungseinheit (102) zur autarken Energieversorgung des Sensorknotens (100) durch Energieumwandlung ausgeführt ist.

3. Sensorknoten nach Anspruch 2,
wobei die Energieversorgungseinheit (102) einen Vibrationsgenerator zur dezentralen Energieversorgung des Sensorknotens (100), einen thermoelektrischen Wandler zur dezentralen Energieversorgung des Sensorknotens (100) und/oder eine Antenne zur Aufnahme elektromagnetischer Energie zur dezentralen Energieversorgung des Sensorknotens (100) aufweist.

4. Sensorknoten nach einem der Ansprüche 2 oder 3,
wobei die Energieversorgungseinheit (102) eine Photovoltaikeinheit zur Umwandlung von Licht in elektrische Energie zur dezentralen Energieversorgung des Sensorknotens (100) aufweist.

5. Sensorknoten nach einem der vorhergehenden Ansprüche,
wobei die Sende- und Empfangseinheit (104) zur drahtlosen Übertragung der erfassten Messwerte für zwei oder mehrere getrennte Frequenzbereiche ausgeführt ist.

6. Sensorknoten nach Anspruch 5,
wobei die Sende- und Empfangseinheit so ausgeführt ist, dass sie den Frequenzbereich zur Übertragung bei Eintreten eines Ereignisses automatisch wechselt.

7. Sensorknoten nach Anspruch 5,
wobei die Änderung der Frequenz der Sende- und Empfangseinheit (104) zur Änderung der Sendefrequenz auf Basis einer vorgegebenen Sequenz ausgeführt ist.

8. Sensorknoten nach einem der vorhergehenden Ansprüche,
wobei die Sensoreinheit (101) so ausgeführt ist, dass sie die Identität angeschlossener Sensoren ermitteln und diese Information an die Prozessoreinheit weitergeben kann.

9. Sensorknoten nach einem der vorhergehenden Ansprüche,
wobei die Sensoreinheit (101), die Energieversorgungseinheit (102) und die Sende- und Empfangseinheit (104) modular ausgeführt sind.

10. Sensornetzwerk für ein Luftfahrzeug, das Sensornetzwerk aufweisend:
eine Vielzahl an Sensorknoten nach einem der vorhergehenden Ansprüche,
eine zentrale Datensammel- und Auswerteeinheit (201) zum Sammeln und Auswerten der übermittelten Messdaten.

11. Sensornetzwerk nach Anspruch 10,
ausgeführt zur Überwachung einer Belegung eines für die Übertragung vorgesehenen Frequenzbereichs sowohl am Installationsort des Sensorknotens (100) als auch bei einer Sende- und Empfangsstation (203, 201) des Sensornetzwerks (200).

12. Sensornetzwerk nach Anspruch 10 oder 11,
ausgeführt zur adaptiven Routenfindung zur Identifikation eines neuen Kommunikationsweges bei Unterschreiten einer vorgegebenen Sendesignalqualität.

13. Modulares Baukastensystem zur Bereitstellung eines Sensornetzwerks nach einem der Ansprüche 11 bis 12.

14. Luftfahrzeug (300) mit einer Systemkomponente und einem Sensornetzwerk nach einem der Ansprüche 10 bis 12 zum Ermitteln eines Zustands der Systemkomponente.

15. Verfahren zum Ermitteln eines Zustands einer Systemkomponente in einem Luftfahrzeug, das Verfahren aufweisend die Schritte:
Versorgung eines Sensorknotens mit elektrischer Energie durch eine Energieversorgungseinheit (102) im Sensorknoten (100);
Erfassen von Messwerten im Bereich der Systemkomponente durch den Sensorknoten (100);
drahtlosen Übertragung der erfassten Messwerte an eine zentrale Datensammel- und Auswerteeinheit (201);
**gekennzeichnet durch**
Durchführung eines Wechsels des Frequenzbereichs zur Übertragung der erfassten vorverarbeiteten Messwerte in Abhängigkeit von einem Wechsel des Flugzustands des Luftfahrzeugs.

## Claims

1. A sensor node for a wireless sensor network for acquiring measured values in an aircraft, wherein the sensor node (100) comprises:
a sensor unit (101) for acquiring the measured values;
a power supply unit (102) for supplying the sensor node with electrical energy; and
a transmitting and receiving unit (104) for wirelessly transmitting the acquired, pre-processed measured values to a central data collection and evaluation unit (201),
**characterized in that**
the sensor node is configured to change a frequency range for transmitting the acquired, pre-processed measured values in dependence of the flight status of the aircraft.

2. The sensor node of claim 1,
wherein the power supply unit (102) is configured to autonomously supply power to the sensor node (100) through energy conversion.

3. The sensor node of claim 2,
wherein the power supply unit (102) comprises a vibration generator for providing the sensor node (100) with a decentralized power supply, a thermoelectric transducer for providing the sensor node (100) with a decentralized power supply and/or an antenna to receive electromagnetic energy for providing the sensor node (100) with a decentralized power supply.

4. The sensor node of any one of claims 2 or 3,
wherein the power supply unit (102) comprises a photovoltaic unit to convert light into electrical energy for providing the sensor node (100) with a decentralized power supply.

5. The sensor node of any one of the preceding claims,
wherein the transmitting and receiving unit (104) is designed to wirelessly transmit the acquired measured values in two or more separate frequency ranges.

6. The sensor node of claim 5,
wherein the transmitting and receiving unit is configured to automatically change the frequency range for transmission when an event arises.

7. The sensor node of claim 5,
wherein the transmitting and receiving unit (104) is configured to change the transmission frequency based on a prescribed sequence.

8. The sensor node of any one of the preceding claims,
wherein the sensor unit (101) is configured to ascertain the identity of connected sensors and relay this information to the processor unit.

9. The sensor node of any one of the preceding claims,
wherein the sensor unit (101), the power supply unit (102) and the transmitting and receiving unit (104) are designed in a modular manner.

10. Sensor network for an aircraft, wherein the sensor network comprises:
a plurality of sensor nodes of any one of the preceding claims,
a central data collection and evaluation unit (201) for collecting and evaluating the transmitted measured data.

11. The sensor network of claim 10,
configured for monitoring an allocation of a frequency range provided for transmission purposes at both the installation site for the sensor node (100) and at the transmitting and receiving station (203, 201) of the sensor network (200).

12. The sensor network of either of claims 10 or 11,
configured for adaptive route determination in order to identify a new communication path if the transmission signal quality drops below a prescribed level.

13. Modular kit of parts for providing a sensor network of any one of claims 11 to 12.

14. An aircraft (300) with a system component and sensor network of any one of claims 10 to 12 for ascertaining a state of the system component.

15. A method for ascertaining a state of a system component in an aircraft, wherein the method involves the following steps:
Supplying a sensor node with electrical energy by way of a power supply unit (102) in the sensor node (100);
Acquiring measured values in the area of the system component via the sensor node (100);
Wirelessly transmitting the acquired measured values to a central data collection and evaluation unit (201);
**characterized by**
Carrying out a change of the frequency range for transmitting the acquired, pre-processed measured values in dependence of a flight status of the aircraft.

## Revendications

1. Un noeud de capteur pour un réseau de capteurs sans fil pour acquérir des valeurs mesurées dans un aéronef, dans lequel le noeud de capteur (100) comprend:
une unité de détection (101) pour acquérir les valeurs mesurées;
une unité d'alimentation électrique (102) pour fournir au noeud de capteur de l'énergie électrique; et
une unité d'émission et de réception (104) pour transmettre sans fil les valeurs mesurées prétraitées acquises à une unité centrale de collecte et d'évaluation de données (201),
**caractérisé en ce que**,
le noeud de capteur est configuré pour changer une gamme de fréquence pour transmettre les valeurs mesurées prétraitées acquises en fonction de l'état de vol de l'aéronef.

2. Noeud de capteur selon la revendication 1,
dans lequel l'unité d'alimentation (102) est configurée pour fournir de manière autonome de l'énergie au noeud de capteur (100) par conversion d'énergie.

3. Noeud de capteur selon la revendication 2,
dans lequel l'unité d'alimentation (102) comprend un générateur de vibrations pour fournir au noeud de capteur (100) une alimentation décentralisée, un transducteur thermoélectrique pour fournir au noeud de capteur (100) une alimentation décentralisée et/ou une antenne pour recevoir l'énergie électromagnétique pour fournir au noeud de capteur (100) une alimentation décentralisée.

4. Noeud de capteur selon l'une quelconque des revendications 2 ou 3,
dans lequel l'unité d'alimentation (102) comprend une unité photovoltaïque pour convertir la lumière en énergie électrique pour fournir au noeud de capteur (100) une alimentation décentralisée.

5. Noeud de capteur selon l'une quelconque des revendications précédentes,
dans lequel l'unité d'émission et de réception (104) est conçue pour transmettre sans fil les valeurs mesurées acquises dans deux gammes de fréquences séparées ou plus.

6. Noeud de capteur selon la revendication 5,
dans lequel l'unité d'émission et de réception est configurée pour changer automatiquement la gamme de fréquences pour la transmission lorsqu'un événement se produit.

7. Noeud de capteur selon la revendication 5,
dans lequel l'unité d'émission et de réception (104) est configurée pour changer la fréquence d'émission sur la base d'une séquence prescrite.

8. Noeud de capteur selon l'une quelconque des revendications précédentes,
dans lequel l'unité de détection (101) est configurée pour déterminer l'identité des capteurs connectés et relayer cette information vers l'unité de traitement.

9. Noeud de capteur selon l'une quelconque des revendications précédentes,
dans lequel l'unité de détection (101), l'unité d'alimentation électrique (102) et l'unité d'émission et de réception (104) sont conçues de manière modulaire.

10. Réseau de capteurs pour un aéronef, dans lequel le réseau de capteurs comprend:
une pluralité de noeuds de capteur selon l'une quelconque des revendications précédentes,
une unité centrale de collecte et d'évaluation de données (201) pour collecter et évaluer les données mesurées transmises.

11. Réseau de capteurs selon la revendication 10,
configuré pour surveiller une allocation d'une gamme de fréquences prévue à des fins de transmission à la fois sur le site d'installation du noeud capteur (100) et sur la station émission et réception (203, 201) du réseau capteur (200).

12. Réseau de capteurs selon l'une des revendications 10 ou 11,
configuré pour la détermination d'un itinéraire adaptatif afin d'identifier un nouveau chemin de communication si la qualité du signal de transmission chute au-dessous d'un niveau prescrit.

13. Kit modulaire de pièces pour fournir un réseau de capteurs selon l'une quelconque des revendications 11 à 12.

14. Aéronef (300) avec un composant de système et un réseau de capteurs selon l'une quelconque des revendications 10 à 12 pour déterminer un état du composant de système.

15. Procédé pour déterminer l'état d'un composant de système dans un aéronef, dans lequel le procédé comprend les étapes suivantes:
Fournir un noeud de capteur avec de l'énergie électrique au moyen d'une unité d'alimentation électrique (102) dans le noeud de capteur (100);
L'acquisition de valeurs mesurées dans la zone du composant système au moyen du noeud de capteur (100);
Transmettre sans fil les valeurs mesurées acquises à une unité centrale de collecte et d'évaluation de données (201);
**caractérisé par**
Effectuer un changement de la gamme de fréquence pour transmettre les valeurs mesurées acquises, prétraitées en fonction d'un état de vol de l'aéronef.
